# EUROPÄISCHE PATENTSCHRIFT

(11) **EP 1 404 206 B1**
(45) Veröffentlichungstag und Bekanntmachung des Hinweises auf die Patenterteilung: **12.08.2015**
(21) Anmeldenummer: 02745390.1
(22) Anmeldetag: 14.06.2002
(51) Int. Cl.: A47L 9/26, B65H 75/44, H02G 11/02

(54) **VORRICHTUNG ZUM SPEICHERN EINES KABELS**
DEVICE FOR STORING A CABLE
DISPOSITIF POUR ENROULER UN CABLE

(30) Priorität: 29.06.2001 DE 20110821 U
(43) Veröffentlichungstag der Anmeldung: 07.04.2004
(73) Patentinhaber: BSH Hausgeräte GmbH, 81739 München (DE)
(72) Erfinder: HAMM, Silvio, 98617 Sülzfeld (DE); PRELL, Manfred, 97724 Burglauer (DE)
(86) Internationale Anmeldenummer: PCT/EP2002/006593
(87) Internationale Veröffentlichungsnummer: WO 2003/001960

(56) Entgegenhaltungen:
- EP-A- 0 063 217
- US-A- 1 747 411

## Beschreibung

Die Erfindung bezieht sich auf Vorrichtungen zum Speichern eines Kabels, insbesondere eines Elektrokabels in einer Kabeltrommel eines Staubsaugers, mit eingangsseitig des Speicherraums angeordneten Rollenkörpern, zwischen denen das Kabel hindurchführbar und in den Vorratsraum einführbar ist, wobei innerhalb eines um eine Achse pendelnden Pendelkörpers mindestens ein erster und mindestens ein zweiter Rollenkörper vorhanden sind, zwischen denen das Kabel hindurchführbar ist.

Eine Vorrichtung zum Speichern eines Kabels ist aus der EP 0 063 217 A1 bekannt. Die bekannte Vorrichtung, die insbesondere für den Einsatz bei Staubsaugern geeignet ist, weist eingangsseitig eines Speicherraums angeordnete Drehwalzen oder Rollen auf, zwischen denen ein Kabel reibungsschlüssig eingeklemmt ist und so frei in den Vorratsraum eingestoßen wird, so dass es sich dort selber in einzelne Lagen ablegt.

Weiter ist aus dem Stand der Technik die US 1,747,411 A bekannt, welche eine Vorrichtung zum Speichern eines Kabels offenbart, mit eingangsseitig des Speicherraums an einem um eine Achse schwenkbaren Pendelkörper angeordneten Rollenkörpern, wobei mindestens ein erster und mindestens ein zweiter Rollenkörper vorhanden sind, zwischen denen das Kabel hindurchführbar und in den Speicherraum einführbar ist.

Es ist die Aufgabe der Erfindung, die aus dem Stand der Technik bekannten Vorrichtungen zu verbessern.

Erfindungsgemäß wird diese Aufgabe bei einer ersten Vorrichtung der eingangs genannten Art dadurch gelöst, dass die Rollenkörper auf der einen Seite von zwei Rollen gebildet sind, die jeweils auf einer Achse in dem Pendelkörper gelagert sind, und auf der anderen Seite von einer Rollenhülse, die die Achse umgibt, um die der Pendelkörper selbst schwenkbar ist, wobei zwischen der Rollenhülse einerseits und den Rollen andererseits das Kabel hindurch verläuft.

In einer vorteilhaften Ausbildung dieser Erfindung ist der Pendelkörper so ausgeführt, dass der Pendelkörper mindestens ein seitlich des ersten und des zweiten Rollenkörpers angeordnetes Tragelement aufweist, an dem der erste und der zweite Rollenkörper gelagert sind.

Weiterhin erfindungsgemäß wird die Aufgabe mittels einer zweiten Vorrichtung der eingangs genannten Art dadurch gelöst, dass die Rollenkörper auf der einen Seite von zwei oberen Rollen und drei unteren Rollen gebildet sind, die jeweils auf einer Achse in dem Pendelkörper gelagert sind, zwischen denen das Kabel hindurch läuft, und auf der anderen Seite von einer Rollenhülse, die die Achse umgibt, um die der Pendelkörper selbst schwenkbar ist.

Schließlich weist gemäß einer weiteren vorteilhaften Ausbildung der erfindungsgemäßen Vorrichtungen der Pendelkörper zwei Tragelemente auf, die fest mit der Rollenhülse verbunden sind, wobei die Rollenhülse drehbar auf der Achse angeordnet ist, und wobei zwischen den Tragelementen die Rollen drehbar gelagert sind.

Durch die erfindungsgemäßen Vorrichtungen wird beim Aufnehmen eines Kabels in einen Speicherraum, insbesondere auf eine Kabeltrommel, erreicht, dass übereinanderliegende Kabelwindungen im Wickelraum straff gewickelt werden, so dass der Wickelraum zum einen optimal genutzt wird und sich zum anderen keine Schlaufen und Verknotungen innerhalb und außerhalb des Wickelraums bilden können, die zu Störungen beim Ein- oder Ausziehen des Kabels führen.

Die erfindungsgemäßen Vorrichtungen bilden einen Leitungsstraffer, der durch seinen begrenzten Einlaufquerschnitt die außerhalb der Vorrichtung liegenden Schlaufen des Kabels auflöst, ohne dass sich das Kabel im Bereich des Leitungsstraffers einklemmen kann. Der Leitungsstraffer ist als Pendelkörper ausgebildet, der eine Pendelbewegung in Einlaufrichtung des Kabels ausführt.

Durch die Lagerung des Pendelkörpers unterstützt dieser eine Oszillierbewegung des Kabels in Verbindung mit den in den Trommelwangen der Kabeltrommel angebrachten Umwerfern.

Durch die Erfindung wird ein optimales Wickelbild des Kabels in der Kabeltrommel erreicht. Verknotungen des Kabels werden vermieden. Es wird beim Ausziehen des Kabels aus der Kabeltrommel eine gleichmäßige Auszugskraft und damit eine geringere Einwirkung auf das Kabel erreicht, als sie bei herkömmlichen Vorrichtungen zum Speichern von Kabeln auftritt.

Nachstehend wird die Erfindung in Ausführungsbeispielen näher erläutert.

Es zeigen:
- Fig. 1: einen ersten Pendelkörper in perspektivischer Ansicht für den Einsatz in einer Vorrichtung zum Speichern eines Kabels;
- Fig. 2 - 4: den Pendelkörper gemäß Fig. 1 im Querschnitt in Ruhestellung und in verschiedenen Pendelstellungen;
- Fig. 5: einen zweiten Pendelkörper im Querschnitt; und
- Fig. 6: den zweiten Pendelkörper in Längsansicht.

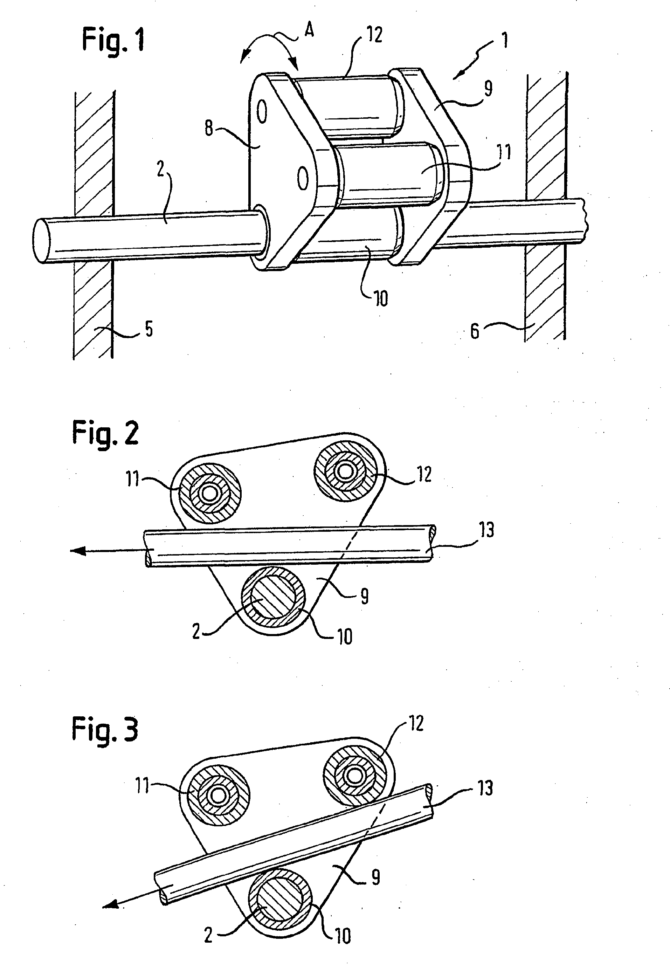

Einer Vorrichtung zum Speichern eines Kabels 13, insbesondere eines Elektrokabels in einer Kabeltrommel eines Staubsaugers, ist ein Pendelkörper 1 (Fig. 1) vorgeordnet, der gegenüber einer festen Achse 2 in der Vorrichtung beweglich gelagert und in Richtung eines Pfeils A schwenkbar ist.

Der Pendelkörper 1 weist zwei Tragelemente 8, 9 auf, die fest mit einer Rollenhülse 10 verbunden sind. Die Rollenhülse 10 ist drehbar auf der Achse 2 angeordnet. Zwischen den Tragelementen 8, 9 sind außerdem Rollen 11 und 12 drehbar gelagert. Zwischen der Rollenhülse 10 einerseits und den Rollen 11 und 12 andererseits verläuft das Kabel 13 (Fig. 2 - 4) hindurch. Je nach Einlaufwinkel des Kabels 13 kann der Pendelkörper 1 verschiedene Stellungen einnehmen und dadurch eine gleichmäßige Straffung des Kabels 13 bewirken.

Die Pendelbewegung wird durch Anschlagen des Kabels 13 an die erste 11 oder die zweite 12 Rolle verursacht, die in einem bestimmten Abstand zu der Welle des Pendelkörpers 1 angeordnet sind. Die Welle des Pendelkörpers 1 wird durch eine, eine feste Achse 2 umgebende, Rollenhülse 10 gebildet.

Durch die Pendelbewegung wird der Abstand zwischen der jeweiligen Rolle 11, 12 und dem Kabel 13 derart verringert, dass das Kabel 13 an einer der Rollen 11, 12 und der Rollenhülse 10 entlangläuft.

Um in vorteilhafter Weise keine zu großen Pendelungen des Pendelkörpers 1 verursachen, wird der Abstand zwischen der ersten 11 und der zweiten 12 Rolle nur geringfügig größer als der Durchmesser des Kabels 13 gewählt.

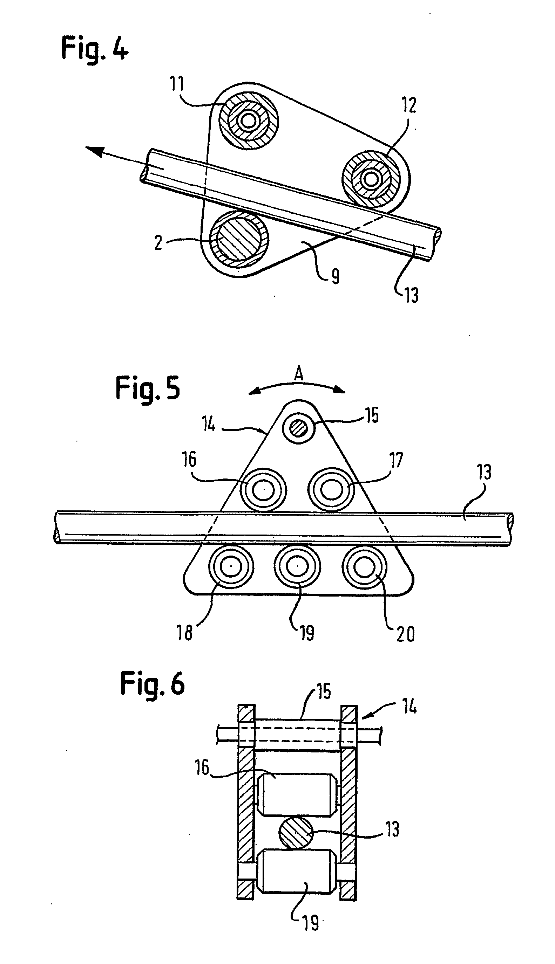

In einem weiteren Ausführungsbeispiel (Fig. 5, 6) ist ein Pendelkörper 14 dargestellt, der neben einer Rollenhülse 15 zwei obere Rollen 16 und 17 sowie drei untere Rollen 18 bis 20 aufweist, zwischen denen das Kabel 13 hindurch läuft. Der Pendelkörper 14 führt Pendelbewegungen um die feste Achse der Rollenhülse 15 aus (Pfeil A).

### Bezugszeichenliste

- 1: Pendelkörper
- 2: Achse

- 8: Tragelement
- 9: Tragelement

- 10: Rollenhülse
- 11: Rolle
- 12: Rolle

- 13: Kabel

- 14: Pendelkörper

- 15: Rollenhülse
- 16: obere Rolle
- 17: obere Rolle
- 18: untere Rolle
- 19: untere Rolle
- 20: untere Rolle

## Patentansprüche

1. Vorrichtung zum Speichern eines Kabels (13), insbesondere eines Elektrokabels in einer Kabeltrommel eines Staubsaugers,
mit eingangsseitig des Speicherraums angeordneten Rollenkörpern, zwischen denen das Kabel (13) hindurchführbar und in den Vorratsraum einführbar ist, wobei innerhalb eines um eine Achse (2) pendelnden Pendelkörpers (1) minbestens ein erster und mindestens ein zweiter Rollenkörper vorhanden sind, zwischen denen das Kabel (13) hindurchführbar ist;
**dadurch gekennzeichnet, dass**
die Rollenkörper auf der einen Seite von zwei Rollen (11, 12) gebildet sind, die jeweils auf einer Achse in dem Pendelkörper (1) gelagert sind, und auf der anderen Seite von einer Rollenhülse (10), die die Achse (2) umgibt, um die der Pendelkörper (1) selbst schwenkbar ist,
wobei zwischen der Rollenhülse (10) einerseits und den Rollen (11, 12) andererseits das Kabel (13) hindurch verläuft.

2. Vorrichtung zum Speichern eines Kabels (13), insbesondere eines Elektrokabels in einer Kabeltrommel eines Staubsaugers,
mit eingangsseitig des Speicherraums angeordneten Rollenkörpern, zwischen denen das Kabel (13) hindurchführbar und in den Vorratsraum einführbar ist, wobei innerhalb eines um eine Achse (2) pendelnden Pendelkörpers (14) mindestens ein erster und mindestens ein zweiter Rollenkörper vorhanden sind, zwischen denen das Kabel (13) hindurchführbar ist;
**dadurch gekennzeichnet, dass**
die Rollenkörper auf der einen Seite von zwei oberen Rollen (16, 17) und drei unteren Rollen (18, 19, 20) gebildet sind, die jeweils auf einer Achse in dem Pendelkörper (1) gelagert sind, zwischen denen das Kabel (13) hindurch läuft, und auf der anderen Seite von einer Rollenhülse (15), die die Achse umgibt, um die der Pendelkörper (14) selbst schwenkbar ist.

3. Vorrichtung nach Anspruch 1, **dadurch gekennzeichnet, dass** der Pendelkörper (1) mindestens ein seitlich des ersten und des zweiten Rollenkörpers angeordnetes Tragelement (8, 9) aufweist, an dem der erste und der zweite Rollenkörper gelagert sind.

4. Vorrichtung nach Anspruch 1 oder 2, **dadurch gekennzeichnet, dass** der Pendelkörper (1 ; 14) zwei Tragelemente (8, 9) aufweist, die fest mit der Rollenhülse (10 ; 15) verbunden sind, wobei die Rollenhülse (10 ; 15) drehbar auf der Achse (2) angeordnet ist, und wobei zwischen den Tragelementen (8, 9) die Rollen (11, 12 ; 16, 17, 18, 19, 20) drehbar gelagert sind.

## Claims

1. Device for storing a cable (13), especially an electric cable in a cable drum of a vacuum cleaner,
with the roller elements disposed on the input side of the storage compartment between which the cable (13) is able to be fed in and is able to be introduced into the storage compartment, wherein at least one first and at least one second roller element, between which the cable (13) is able to be fed, are present within a swing element (1) able to be swung about an axis (2);
**characterised in that**
the roller elements are formed on one side by two rollers (11, 12) which are each supported on an axis in the swing element (1) and on the other side by a roller sleeve (10), which surrounds the axis (2) about which the swing element (1) itself is able to be hinged,
wherein the cable (13) runs through between the roller sleeve (10) on one side and the rollers (11, 12) on the other side.

2. Device for storing a cable (13), especially an electric cable in a cable drum of a vacuum cleaner,
with the roller elements disposed on the input side of the storage compartment between which the cable (13) is able to be fed in and is able to be introduced into the storage compartment, wherein at least one first and at least one second roller element, between which the cable (13) is able to be fed, are present within a swing element (1) able to be swung about an axis (2);
**characterised in that**
the roller elements are formed on one side by two upper rollers (16, 17) and three lower rollers (18, 19, 20), which are each supported on an axis in the swing element (14) between which the cable (13) runs through,
and on the other side by a roller sleeve (15), which surrounds the axis about which the swing element (14) itself is able to be hinged.

3. Device according to claim 1, **characterised in that** the swing element (1) has a least one support element (8, 9) disposed to the side of the first and the second roller element, on which the first and the second roller elements are supported.

4. Device according to claim 1 or 2, **characterised in that** the swing element (1 ; 14) has two support elements (8, 9) which are firmly connected to the roller sleeve (10 ; 15), wherein the roller sleeve (10 ; 15) is disposed rotatably on the axis (2) and wherein the rollers (11, 12; 16, 17, 18, 19, 20) are supported rotatably between the support elements (8,9).

## Revendications

1. Dispositif pour enrouler un câble (13), en particulier un câble électrique dans un tambour à câble d'un aspirateur,
avec des corps roulants disposés côté entrée de la chambre d'enroulement, entre lesquels le câble (13) peut être guidé et introduit dans la chambre de rangement, dans lequel il se trouve à l'intérieur d'un corps oscillant (1) qui oscille autour d'un axe (2) au moins un premier et au moins un deuxième corps roulants, entre lesquels le câble (13) peut être guidé, **caractérisé en ce que** les corps roulants sont formés sur un premier côté par deux rouleaux (11, 12) qui sont montés chacun sur un axe dans le corps oscillant (1) et sur l'autre côté par une douille roulante (10), qui entoure l'axe (2) autour duquel le corps oscillant (1) peut lui-même pivoter,
dans lequel le câble (13) pénètre entre la douille roulante (10) d'une part et les rouleaux (11, 12) d'autre part.

2. Dispositif pour enrouler un câble (13), en particulier un câble électrique dans un tambour à câble d'un aspirateur,
avec des corps roulants disposés côté entrée de la chambre d'enroulement, entre lesquels le câble (13) peut être guidé et introduit dans la chambre de rangement, dans lequel il se trouve à l'intérieur d'un corps oscillant (14) qui oscille autour d'un axe (2) au moins un premier et au moins un deuxième corps roulants, entre lesquels le câble (13) peut être guidé, **caractérisé en ce que** les corps roulants sont formés sur un premier côté par deux rouleaux supérieurs (16, 17) et trois rouleaux inférieurs (18, 19, 20), qui sont montés chacun sur un axe dans le corps oscillant (1), entre lesquels le câble (13) pénètre, et sur l'autre côté par une douille roulante (15), qui entoure l'axe autour duquel le corps oscillant (14) peut lui-même pivoter.

3. Dispositif selon la revendication 1, **caractérisé en ce que** le corps oscillant (1) présente au moins un élément d'appui (8, 9) disposé latéralement au premier et au deuxième corps roulants, sur lequel le premier et le deuxième corps roulants sont montés.

4. Dispositif selon la revendication 1 ou 2, **caractérisé en ce que** le corps oscillant (1; 14) présente deux éléments d'appui (8, 9), qui sont reliés de façon solidaire à la douille roulante (10; 15), dans lequel la douille roulante (10; 15) est disposée de façon rotative sur l'axe (2), et dans lequel les rouleaux (11, 12; 16, 17, 18, 19, 20) sont montés de façon rotative entre les éléments d'appui (8, 9).
